# FASCICULE DE BREVET EUROPEEN

(11) **EP 0 712 699 B1**
(45) Date de publication et mention de la délivrance du brevet: **27.05.1998**
(21) Numéro de dépôt: 95420317.0
(22) Date de dépôt: 15.11.1995
(51) Int. Cl.: B26D 7/06, B26D 1/08, B26D 7/08, A21C 15/04, B26D 7/32

(54) **Installation pour le tranchage de pâtés en croûte et autres aliments présentés en pains**
Aufschnittschneidvorrichtung zum Schneiden von Pâté en Croûte und von anderen laibförmigen Nahrungsmitteln
Slicing device for cutting Pâté en Croûte and other food loaves

(30) Priorité: 15.11.1994 FR 9413876
(43) Date de publication de la demande: 22.05.1996
(73) Titulaire: MECAMATIC, 01960 Peronnas (FR)
(72) Inventeur: Chevelu, Jean-Marc, F-01290 Pont de Veyle (FR)
(74) Mandataire: Perrier, Jean-Pierre

(56) Documents cités:
- EP-A- 0 434 853
- EP-A- 0 509 230
- EP-A- 0 587 921
- DE-A- 3 018 446
- DE-U- 8 229 720
- GB-A- 680 870
- US-A- 5 163 865

## Description

L'invention est relative au tranchage de produits alimentaires présentés en pain et vise plus spécialement, mais non exclusivement, le tranchage des pâtés en croûte.

On rappellera, qu'à la différence des pâtés traditionnels, la farce des pâtés en croûte est disposée à l'intérieur d'une enveloppe de pâte, cuite sur elle et contenant de la gelée entre cette farce et le chapeau de l'enveloppe.

Lors de la vente au détail en charcuterie, chaque tranche est découpée au couteau dans le pâté en croûte, en prenant soin de ne pas séparer le chapeau de l'enveloppe formée par la croûte et de ne pas disperser la gelée.

Pour permettre la vente de tranches de pâté en croûte dans les centres de distribution et dans les grandes surfaces, il est nécessaire de découper chaque pâté en tranches avant de procéder au conditionnement de ces tranches, par paquets de plusieurs tranches.

Actuellement, ce découpage est assuré en disposant le pâté transversalement sur un convoyeur l'amenant contre des lames de découpage verticales et parallèles qui, faisant partie d'un peigne déplaçable verticalement, sont en même nombre que le nombre de découpes devant être réalisées dans le pâté. Après découpage, les deux talons du pâté sont séparés des autres tranches et les tranches sont conduites au poste de conditionnement.

Un premier inconvénient de cette technique de découpage est qu'elle entraîne une perte de matière qui est égale à l'épaisseur des lames multipliée par le nombre de découpes. Par exemple, pour un pâté en croûte ayant une longueur de 50 cm, découpé par 33 lames ayant chacune une épaisseur de 1 mm, la perte par le découpage est de l'ordre de 9 % du poids initial du pâté en croûte, sans prendre en compte les talons.

Un autre inconvénient résulte de la structure du peigne multilames qui impose de découper des tranches d'épaisseurs constantes et qui ne permet pas d'ajuster aisément cette épaisseur, soit à la demande du client, soit pour obtenir des tranches de valeur pondérale voisine, par exemple, en compensant par l'épaisseur, les variations de masse de la farce.

Le brevet US-A-5163865 décrit une installation de tranchage de portions dans un aliment comprenant un convoyeur à déplacement continu et, au poste de tranchage, une sonotrode déplaçable verticalement et portée par une structure déplaçable longitudinalement pour suivre l'élément pendant la découpe.

Cette installation ne peut pas être appliquée au tranchage de portions de faible épaisseur, car l'inertie des moyens permettant à la sonotrode d'accompagner le mouvement de l'aliment influerait sur la précision de l'épaisseur tranchée.

Le brevet DE-U-8229720 est relatif à une installation pour le tranchage d'aliments en pain dans laquelle l'extrémité postérieure de chaque pain est saisi par des griffes portées par un chariot, déplaçable longitudinalement mais alternativement dans un sens ou dans l'autre par rapport à un plan incliné. Cette installation n'est pas applicable aux pâtés en croûte car, l'inclinaison du pain favoriserait, au poste de tranchage, la fuite de la gelée comprise en la chair et la croûte et conduirait à des tranches non présentables et non vendables. De plus, le tranchage par lame rotative entraîne des pertes de matière.

Il en est de même pour l'installation décrite dans DE-A-4235985.

Enfin, l'installation décrite dans US-A-3502127 assure l'entraînement positif des aliments par des aiguilles saillant d'un convoyeur, et ne pouvant pas être utilisées pour déplacer un pâté en croûte car elles pourraient briser la croûte. Par ailleurs, les moyens de tranchage transversaux conduiraient aux mêmes pertes de matière que les dispositifs multilames actuels.

La présente invention a pour objet de remédier à ces inconvénients en fournissant une installation pour le tranchage des pâtés en croûte et autres aliments présentés en pain n'entraînant pas de perte de matière, hormis les talons, et permettant d'ajuster en fonctionnement l'épaisseur des tranches découpées tout en fonctionnant de manière entièrement automatique, donc sans aucune manipulation humaine susceptible d'apporter une contamination.

L'installation selon l'invention est du type dans laquelle les moyens de tranchage sont constitués par un ensemble à ultrasons composé d'un émetteur, d'un amplificateur et d'une sonotrode couteau, de plus grande largeur que celle de l'aliment qu'elle doit trancher.

Selon l'invention, cette installation comprend :
- un convoyeur principal dont le tapis est entraîné positivement avec un mouvement pas à pas, de pas réglable, entre un poste amont de chargement, où chaque pain est disposé longitudinalement, et un poste aval de tranchage,
- des moyens d'entraînement latéraux positifs et sans fin, disposés de chaque côté du convoyeur avec lequel ils sont synchronisés et portant, ensemble, des traverses s'étendant transversalement au-dessus du tapis, ces traverses étant espacées longitudinalement par une distance supérieure à la longueur d'un aliment en pain, et étant aptes, chacune et successivement, à venir en contact avec le talon arrière d'un aliment en pain,
- des crochets qui, articulés sur des arbres transversaux portés par les traverses sont solidaires chacun d'un levier coopérant avec des rampes latérales aptes à les amener, entre le poste de chargement et le poste de tranchage, d'une position inactive à une position active dans laquelle chaque crochet pénètre, par le haut, dans le talon arrière du pain en l'immobilisant contre la traverse correspondante,
- et un poste de tranchage composé d'une sonotrode couteau reliée à des moyens aptes à lui communiquer un déplacement vertical, accéléré puis décéléré, dans un plan vertical passant par l'axe longitudinal du rouleau aval du convoyeur.

Avec cette installation, lorsque chaque aliment en pain, et par exemple chaque pâté en croûte, est posé et positionné longitudinalement sur le tapis du convoyeur et que le convoyeur avance pas à pas, l'un des crochets associés à ce convoyeur pénètre dans le talon arrière du pâté. Ce mode de liaison évite tout glissement du pâté par rapport au tapis du convoyeur et, surtout, permet, lorsque le pâté ou l'aliment en pain en cours de tranchage acquiert une largeur inférieure à sa hauteur, d'éviter que l'ensemble bascule sur le tapis. Cela favorise le tranchage des dernières tranches jusqu'à la limite du talon qui est normalement retiré, et supprime tout incident de fonctionnement et tout risque de perte de matière.

On notera par ailleurs que le recours à une sonotrode couteau coopérant avec un appui résistant, constitué par le rouleau de renvoi du tapis, permet d'assurer un tranchage régulier, sans aucune perte de matière.

Par ailleurs, l'indépendance des moyens commandant l'action de tranchage de la sonotrode par rapport à ceux commandant le déplacement du tapis, permet, par simple modification du pas d'avancement du tapis, de modifier instantanément l'épaisseur des tranches découpées, soit pour satisfaire la demande particulière d'un client, soit pour ajuster le poids des tranches en fonction de la densité de la farce, afin d'obtenir des conditionnements de poids constant.

Dans une forme d'exécution de l'invention, le convoyeur est composé de plusieurs bandes juxtaposées et espacées entre lesquelles s'insèrent, au niveau de leur zone de renvoi aval, les zones de renvoi amont des bandes d'un convoyeur portionneur, comportant des taquets saillant de chaque bande pour caler la première tranche d'une portion de plusieurs tranches.

Ainsi, lorsqu'une tranche est séparée du pain elle s'incline vers l'aval et vient s'appuyer contre une rangée de taquets ou contre la dernière tranche de la pile de tranches en appui sur une rangée de taquets. Cette disposition réduit la course de chute de la tranche, évite que la gelée du pâté se sépare de la chair ou que la croûte se morcelle, et permet de former des portions de plusieurs tranches, ce qui simplifie le conditionnement ultérieur.

D'autres caractéristiques et avantages ressortiront de la description qui suit en référence au dessin schématique annexé représentant, à titre d'exemple non limitatif, une forme d'exécution de cette installation, dans le cas de son application au tranchage de pâtés en croûte.
Figure 1 en est une vue de côté en coupe longitudinale,
Figure 2 en est une vue partielle de face et en coupe transversale, au poste de tranchage,
Figure 3 est une vue partielle de côté et en élévation du poste de tranchage, pendant la phase de tranchage,
Figure 4 est une vue partielle, de côté et en coupe longitudinale, d'un crochet de maintien de l'aliment, immédiatement après le poste de chargement.
Figures 5 et 6 sont des vues de côté d'une autre forme d'exécution de l'installation, lorsque celle-ci est respectivement en position de travail et en position de recul.
Figures 7 et 8 sont des vues en élévation, respectivement en bout et de dessus, de l'installation de figure 5.

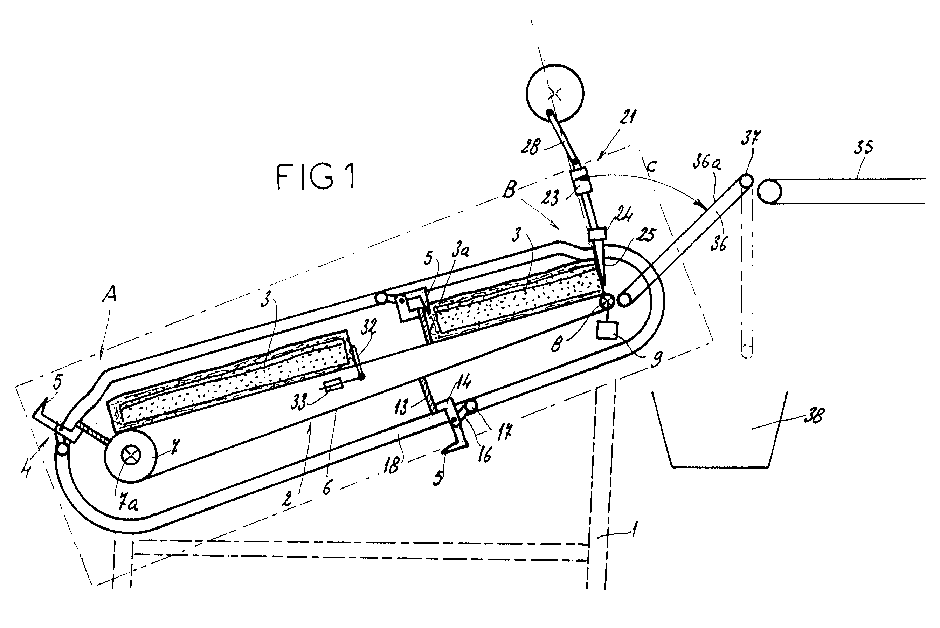

A la figure 1, la référence numérique 2 désigne un convoyeur principal apte à déplacer des pâtés en croûte 3 entre un poste de chargement amont A et un poste de tranchage B. A ce convoyeur, sont associés des moyens d'entraînement latéraux 4 portant des crochets articulés 5.

Le convoyeur principal 2 comprend, porté par un bâti 1, un tapis sans fin 6, ou des bandes juxtaposées et espacées latéralement, passant sur un rouleau de renvoi amont 7 et un rouleau moteur aval 8, relié à des moyens moteurs 9 aptes à lui communiquer un mouvement de déplacement pas à pas, de pas variable.

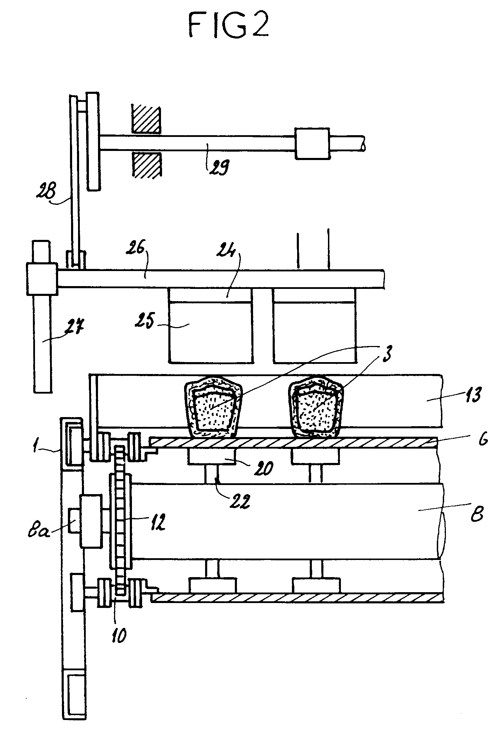

Dans la forme d'exécution représentée, les moyens d'entraînement latéraux 4 sont constitués par des chaînes à maillons 10 décrivant une trajectoire sans fin en passant sur des roues dentées 12 (figure 2) calées sur les arbres 7a et 8a des rouleaux, respectivement, de renvoi 7 et moteur 8 du tapis.

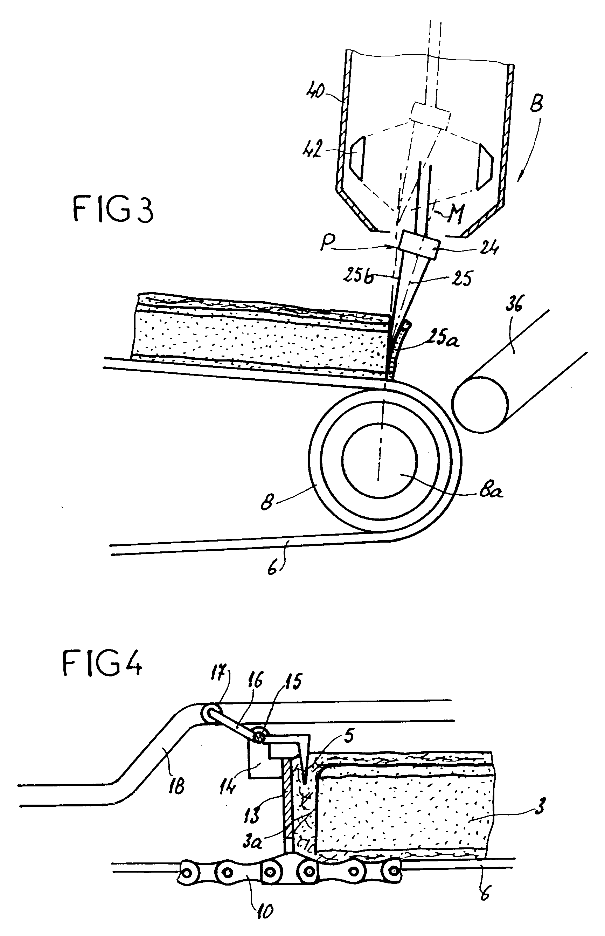

Comme le montre plus en détail la figure 2, chaque chaîne 10 est reliée à la chaîne disposée de l'autre côté du tapis par des traverses 13 s'étendant perpendiculairement au-dessus du tapis et formant des taquets pousseurs pour les pâtés 3. Il est évident que les traverses sont espacées longitudinalement d'une valeur supérieure à la longueur d'un pâté. Chaque traverse porte, comme montré à la figure 4, des paliers 14 pour un arbre transversal 15 sur lequel est calé, au moins un crochet 5, ce crochet étant disposé dans la zone de la traverse venant en appui contre le talon arrière du pâté 3. Chaque arbre 15 est solidaire d'un levier latéral 16 dont l'extrémité libre est munie d'un galet 17 apte à coopérer avec une rampe de guidage 18 formée sur le flanc interne du bâti du convoyeur. Ces rampes sont agencées pour maintenir les crochets 5 dans une position inactive, représentée sur la partie gauche de la figure 1, et cela entre le poste de tranchage B et le poste de chargement A, et dans une position active, représentée figure 4, entre le poste de chargement A et le poste de tranchage B. La figure 4 montre que, lorsque le crochet est en position active, il pénètre dans le talon arrière 3a du pâté en croûte 3.

En raison de cette construction, le déplacement des chaînes et, en conséquence, des crochets et des traverses 13, est parfaitement synchronisé avec le déplacement du tapis 2, et cela d'autant plus que, comme montré à la figure 2, ce tapis comporte, en saillie de sa face intérieure, des dents 20 qui coopèrent avec des dentures 22 portées par le rouleau moteur 8 et par le rouleau de renvoi 7.

Les moyens de tranchage disposés au poste de tranchage B sont constitués par un ensemble à ultrasons 21 comprenant un émetteur 23, un amplificateur 24, et une sonotrode couteau 25. Ces différents moyens sont portés, comme montré à la figure 2, par un coulisseau 26 qui, mobile sur des glissières 27, est attelé à un ensemble bielle-manivelle 28, entraîné par un arbre moteur 29 à fonctionnement cyclique.

Ce mode d'entraînement de la sonotrode 25 permet de lui communiquer, dans la phase de tranchage, un mouvement d'abord uniformément accéléré puis uniformément décéléré. Ce mouvement est particulièrement intéressant pour le tranchage de la partie supérieure d'un pâté en croûte, car il évite de morceler la croûte et la gelée.

Comme montré plus en détail à la figure 3, le plan de déplacement P de l'arête de tranchage 25a de la sonotrode 25 sécante le rouleau aval 8 du convoyeur et passe sensiblement par l'axe longitudinal de ce rouleau. Cette disposition permet d'utiliser le rouleau comme contrepartie s'opposant à l'effort de tranchage et d'éviter le recours à tout autre moyen.

En outre, et comme le montre cette même figure 3, le plan médian M de la sonotrode est incliné sur l'avant par rapport au plan de tranchage P, de manière que sa face arrière 25b ne vienne pas en contact avec la face de l'aliment en cours de tranchage.

Cette dépouille évite que la gelée ou les matières grasses constitutives de l'aliment soient entraînées par l'organe effectuant le tranchage.

Dans la forme d'exécution représentée, le poste de tranchage est muni d'un caisson 40 contenant des sources opposées 42 de rayons ultra-violets, assurant la stérilisation de la sonotrode 25 chaque fois qu'elle parvient à son point mort haut comme montré en traits mixtes fig. 3.

L'installation comporte également, au poste de chargement A, au moins un taquet de retenue 32 qui, visible à la figure 1, est associé à des moyens de rappel 33, de type contrepoids ou ressorts, aptes à le maintenir dans une position active, dans laquelle il passe à travers une ouverture du tapis 6 ou entre les bandes du convoyeur, et à permettre son effacement au-dessous du tapis, lorsque le pâté qu'il retenait est déplacé en translation pour quitter le poste de chargement.

Enfin, l'installation est munie, entre le convoyeur principal 2 et un convoyeur 35 d'évacuation des tranches découpées, d'un convoyeur d'éjection 36. Ce convoyeur est monté basculant autour de l'axe de son rouleau aval 37 et est relié à des moyens, non représentés, aptes à le faire passer d'une position de transfert, représentée en traits forts à la figure 1, à une position d'éjection, représentée en traits mixtes à la même figure. On notera que, lorsque ce tapis est en position de transfert, l'angle c formé entre sa face supérieure 36a et le plan P de tranchage est inférieur à 90°, de manière à limiter l'angle de basculement de la tranche découpée. Lorsqu'il est en position d'éjection, sa face supérieure est proche de la verticale, de manière à mettre à profit la gravité pour faire tomber l'élément qu'il porte dans un caisson de réception 38, disposé au-dessous de lui.

Le fonctionnement de cette installation est le suivant. Chaque pâté en croûte de dimensions régulières est amené par un convoyeur de transfert, non représenté, au poste de chargement A du convoyeur 2. Durant ce transfert , le talon avant du pâté vient en contact avec le taquet de retenue 32 qui le maintient, même si le tapis 6 est déplacé pas à pas et cela jusqu'à ce que la traverse pousseuse 13 correspondante vienne en contact avec son talon arrière. A partir de là, le pâté est parfaitement positionné par rapport au tapis 6, est poussé par la traverse 13 et se déplace en synchronisme avec ce tapis.

Simultanément ou successivement, le crochet 5 associé à la traverse 13 est amené en position active par les rampes 18 et pénètre dans le talon arrière 3a du pâté.

Sous le déplacement du pâté, le taquet de retenue 32 s'efface au-dessous du tapis 6, prêt à revenir en position de retenue, dès qu'une nouvelle ouverture du tapis lui en laissera la possibilité.

Lorsque l'extrémité avant du pâté arrive au poste de tranchage, il est d'abord procédé à la découpe de son talon avant au moyen de la sonotrode couteau 25. Dès que le talon est découpé, il tombe sur la face supérieure 36a du tapis 36 qui, d'abord, l'éloigne de la zone de tranchage, puis, passe en position d'éjection pour diriger ce talon dans le récipient 38. Après cette éjection, le tapis 36 revient en position de transfert pour amener chacune des tranches découpées par la sonotrode sur le tapis d'évacuation 35.

Durant ce découpage, et grâce à l'utilisation de la sonotrode couteau qui, de façon connue, dissocie la matière sans entraîner de perte, le tranchage s'effectue sans aucune perte de matière. Par ailleurs, en réglant la longueur du pas d'avancement du pâté 3, entre deux opérations de tranchage, il est possible de régler l'épaisseur de chacune des tranches avec une précision de l'ordre de plus ou moins 0,05 mm. Ce réglage est effectué en agissant sur l'alimentation du moteur 9 d'entraînement du convoyeur 2 par l'intermédiaire de moyens bien connus de l'Homme de l'Art et qui n'ont pas être décrits ici.

Lorsque, à la suite du découpage successif, la longueur restante de pâté est inférieure à la hauteur de ce pâté, la partie restante reste parfaitement stable, grâce au crochet 5 qui maintient son talon en appui contre la traverse 13. Il en résulte que les conditions de tranchage sont constantes du début jusqu'à la fin du pâté.

Lorsque la dernière tranche a été coupée et que seul le talon reste pincé entre le crochet 5 et la traverse 13, la rampe 18 amène le crochet en position inactive et permet ainsi au talon de tomber sur le convoyeur d'éjection 36, aidé en cela par la traverse. A ce stade, le convoyeur d'éjection passe en position d'éjection pour faciliter le transfert par gravité du talon arrière dans le récipient 38.

Une telle installation fonctionne de manière entièrement automatique et ne nécessite aucune intervention humaine aussi bien pour charger les pâtés sur le convoyeur principal 2, que pour évacuer les talons ou pour transférer les tranches sur le convoyeur d'évacuation. Elle présente l'avantage de supprimer tous les risques de contamination par manipulation humaine.

Il est évident qu'une même installation peut assurer le tranchage simultané de plusieurs pâtés disposés en rangées parallèles, comme montré à la figure 2, chaque rangée coopérant avec des crochets et une sonotrode indépendants de ceux des autres rangées.

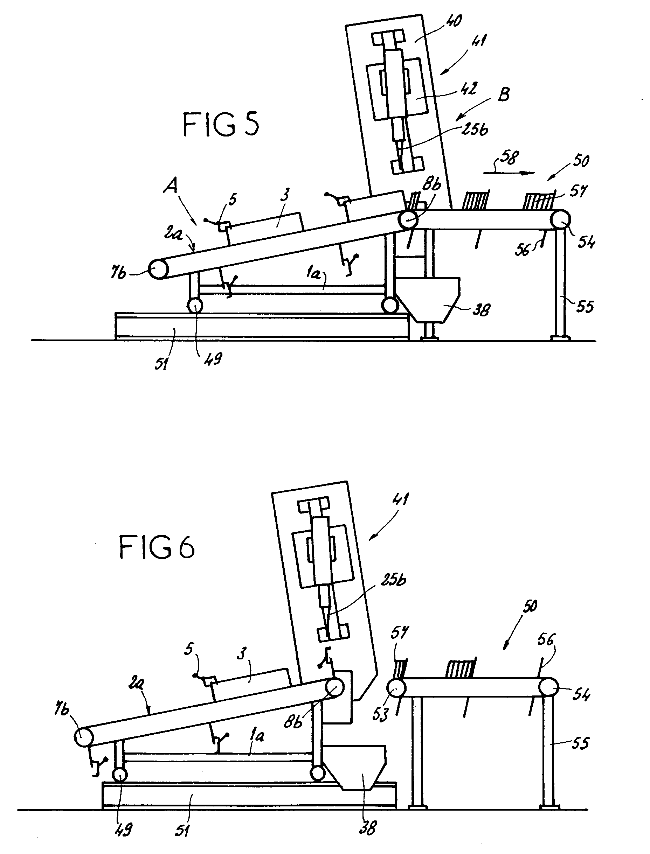

Dans la forme d'exécution représentée aux figures 5 à 8, le convoyeur principal 2a comprend en remplacement du tapis 6 des bandes 6a juxtaposées et espacées décrivant une trajectoire sans fin entre des rouleaux de renvoi 7b et des rouleaux moteurs 8b portés par des chapes, non représentées, du bâti 1a. Excepté cette différence le convoyeur est en tout point semblable à celui de la forme d'exécution précédente. La sonotrode 25b des moyens de tranchage 41 est portée par un châssis 40 qui est solidaire du bâti 1a.

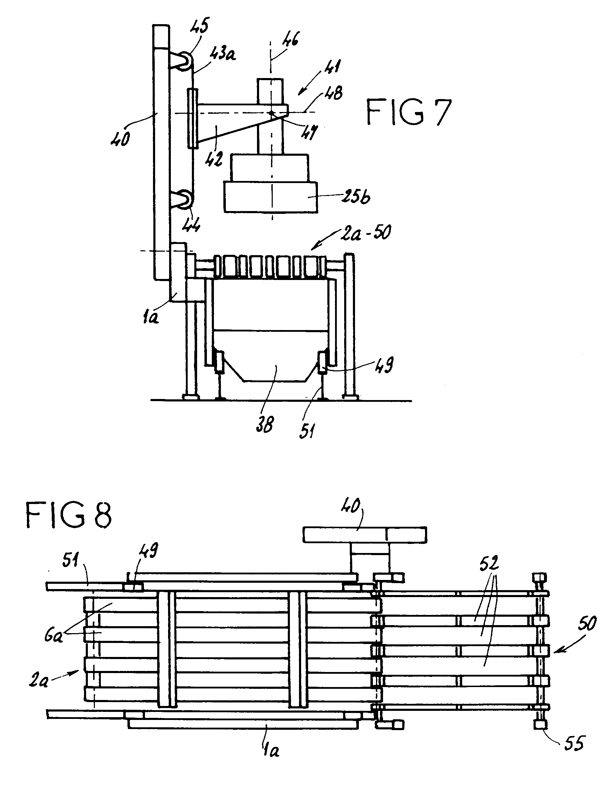

La figure 7 montre que l'ensemble des moyens de tranchage 41 sont portés par une console 42 qui est mobile en translation sur des glissières, non représentées, portées par le châssis 40. Cette console est solidaire de l'un des brins 43a d'une transmission de mouvement, de type chaînes ou courroies, décrivant une trajectoire sans fin entre un rouleau moteur 44 et un rouleau de renvoi 45. Le rouleau moteur est relié à un moteur électrique pouvant lui communiquer un mouvement d'abord accéléré puis ensuite décéléré.

Les moyens de tranchage 41 sont portés par la console 42 avec possibilité de réglage angulaire autour de trois axes orthogonaux comprenant l'axe vertical, 46 à la figure 7, et les axes, respectivement, longitudinal 47 et transversal 48, à la même figure.

Le bâti la est doté de moyens de roulement 49 permettant de le déplacer sur un chemin de roulement 51 pour l'amener d'une position de travail, représentée à la figure 5, à une position de recul, montrée à la figure 6. Ce déplacement est effectué par des moyens motorisés, non représentés, régis par les moyens de commande de l'installation.

Cette installation comprend, en remplacement du convoyeur d'évacuation 35 et du convoyeur d'éjection 36, un convoyeur portionneur 50. Ce convoyeur est également composé de plusieurs bandes 52, juxtaposées et espacées, décrivant une trajectoire continue entre des rouleaux, respectivement de renvoi 53 et moteur 54, portées par des chapes, non représentées, faisant partie du bâti 55 de ce convoyeur.

La figure 8 montre bien que les bandes 52 du convoyeur portionneur 50 s'insèrent dans les intervalles entre les bandes 6a du convoyeur principal 2a et forment par leurs brins supérieurs un plan de transport prolongeant le plan supérieur du convoyeur 2.

Chaque bande 52 comporte des taquets 56 saillant vers l'extérieur. Chaque taquet a une hauteur supérieure à celle d'une tranche du pâté 3 et est séparé de ses voisins par une distance supérieure à la longueur d'un pain d'aliment et par exemple d'un pâté. Ces taquets sont disposés de manière que lorsqu'ils sont sur le brin supérieur ils fassent saillie vers le haut, tout en étant inclinés vers l'aval.

Lorsque l'installation est en position de travail, comme montré à la figure 5, chaque tranche 57, découpée par les moyens de tranchage 41, bascule naturellement par gravité sur le taquet 56 le plus proche ou sur la tranche précédente déjà en appui contre ce taquet. Au fur et à mesure du sectionnement les taquets 56 se déplacent pas à pas dans le sens de la flèche 58 de la figure 5 jusqu'à ce que soit atteint un nombre de tranche déterminé, correspondant à une portion. On notera que ce nombre peut être modifié en fonctionnement pour adapter le tranchage à la demande.

Lorsque le nombre de tranches est atteint, de même que lorsque le pain arrive en fin de découpage et qu'il faut évacuer le talon arrière 3a, les convoyeurs 2a et 50 sont arrêtés et le convoyeur 2a est amené dans la position de recul, réprésentée à la figure 6. Grâce à l'écartement entre l'extrémité aval du convoyeur 2a et l'extrémité amont du convoyeur 50, le talon 3a peut être éjecté dans le caisson de réception 38, porté par le châssis 1a. De même, la traverse 13 peut pivoter pour venir sur le dessous du convoyeur 2a, et, éventuellement, le taquet suivant 56 du convoyeur 50 peut venir en position supérieure pour accueillir une nouvelle série de tranches.

Avant de ramener le convoyeur 2a en position de travail, le pain suivant 3 est amené sous les moyens de tranchage 41 de manière que ceux-ci sectionnent son talon avant. C'est seulement après cette opération que l'ensemble du convoyeur avec les moyens de tranchage sont ramenés en position de travail et que le tranchage est repris.

Le convoyeur principal 2a est également amené dans sa position de recul chaque fois que le nombre de tranches d'une portion est atteinte et ceci afin de permettre le passage entre les deux convoyeurs 2a et 50 du taquet 56 suivant.

Grâce à cet agencement, les tranches découpées ne subissent aucun choc pouvant entraîner dans le cas d'un pâté la séparation de la gelée et de la chair, et le conditionnement est facilité, puisque chaque portion ou lot comprend un nombre de tranches correspondant au besoin.

Au poste de conditionnement chaque portion ou lot est saisi manuellement et est déposé dans un conditionnement approprié.

L'installation qui a été décrite dans le cas de son application au tranchage des pâtés en croûte peut aussi être utilisée pour trancher tout autre aliment présenté en pain tel que jambon cuit, foie gras, pâtée, mousse, pâtisserie, fromage

## Revendications

1. Installation pour le tranchage de pâtés en croûte et autres aliments présentés en pain, comprenant
- un convoyeur principal (2, 2a) dont le tapis (6) est entraîné positivement avec un mouvement pas à pas, de pas réglable, entre un poste amont (A) de chargement, où chaque pain (3) est disposé longitudinalement, et un poste aval (B) de tranchage,
- des moyens d'entraînement latéraux positifs et sans fin (4), disposés de chaque côté du convoyeur avec lequel ils sont synchronisés et portant, ensemble, des traverses (13) s'étendant transversalement au-dessus du tapis (5), ces traverses étant espacées longitudinalement par une distance supérieure à la longueur d'un aliment en pain, et étant aptes, chacune et successivement, à venir en contact avec le talon arrière (3a) d'un aliment en pain,
- des crochets (5) qui, articulés sur des arbres transversaux (15) portés par les traverses (13) sont solidaires chacun d'un levier (16) coopérant avec des rampes latérales (18) aptes à les amener, entre le poste de chargement (A) et le poste de tranchage (B), d'une position inactive à une position active dans laquelle chaque crochet (5) pénètre, par le haut, dans le talon arrière (3a) du pain (3) en l'immobilisant contre la traverse (13) correspondante,
- et un poste de tranchage (B) composé d'une sonotrode couteau (25) reliée à des moyens aptes à lui communiquer un déplacement vertical, accéléré puis décéléré, dans un plan vertical passant par l'axe longitudinal du rouleau aval (8) du convoyeur (2, 2a).

2. Installation selon la revendication 1, **caractérisée en ce qu'**elle comprend, au poste de chargement (A) un taquet articulé (32) qui, disposé sous le tapis avec ses moyens de rappel (33) est apte, dans la phase de chargement et pour retenir longitudinalement le pain, à passer à travers l'une des ouvertures dont est munie le tapis, et, après mise en place des crochets (5) dans le talon arrière (3a), à s'effacer élastiquement sous la poussée du taquet pousseur (13).

3. Installation selon l'une quelconque des revendications 1 et 2, **caractérisée en ce que** la face (25a) de la sonotrode couteau (25), qui est tournée vers l'arrière, est inclinée sur l'avant par rapport au plan de tranchage (P) de manière à ne pas venir en contact avec la face avant de l'aliment en cours de tranchage.

4. Installation selon l'une quelconque des revendications 1 à 3 **caractérisée en ce que** le convoyeur (2, 2a) est composé de plusieurs bandes (6a), juxtaposées et espacées, entre lesquelles s'insèrent, au niveau de leur zone de renvoi aval, les zones de renvoi amont des bandes (52) d'un convoyeur portionneur (50), comportant des taquets (56) saillant de chaque bande pour caler la première tranche (57) d'une portion de plusieurs tranches.

5. Installation selon la revendication 1 **caractérisée en ce que** le convoyeur portionneur 50 occupe une position fixe tandis que le convoyeur principal (2, 2a) et son poste de tranchage (41) sont montés sur un châssis (1a), déplaçable longitudinalement par des moyens moteurs, entre une position de travail, dans laquelle ses bandes s'insèrent entre celles (52) du convoyeur portionneur (50), et une position de recul, dans laquelle les bandes (6a) des deux convoyeurs sont espacées pour laisser passer les taquets 56, ou s'évacuer les talons (3a).

## Claims

1. Installation for slicing pâté en croûte and other food loaves, comprising:
- a main conveyor (2, 2a) the belt (6) of which is driven positively in a step by step movement, with adjustable step length, between an upstream loading station (A) where each loaf (3) is placed longitudinally, and a downstream slicing station (B),
- endless and positive lateral drive means (4), arranged on either side of the conveyor with which they are synchronized and which, together, bear cross members (13) extending transversely above the belt (6), these cross members being spaced longitudinally by a distance that exceeds the length of a food loaf and being capable, each in turn, of coming into contact with the tail end (3a) of a food loaf,
- hooks (5) which, articulated to transverse shafts (15) borne by the cross members (13) are each secured to a lever (16) that interacts with lateral ramps (18) capable of bringing them, between the loading station (A) and the slicing station (B), from an inactive position into an active position in which each hook (5) enters the tail end (3a) of the loaf (3) from above, immobilizing it against the corresponding cross member (13),
- and a slicing station (B) composed of a sonotrode cutter (25) connected to means capable of imparting to it a vertical displacement, accelerated then decelerated in a vertical plane passing through the longitudinal axis of the downstream roller (8) of the conveyor (2, 2a).

2. Installation according to Claim 1, characterized in that it comprises, at the loading station (A), an articulated dog (32) which, arranged beneath the belt with its return means (33) is capable, in the loading phase and in order to retain the loaf longitudinally, of passing through one of the openings with which the belt is equipped, and after the hooks (5) have become inserted in the tail end (3a), of retracting elastically under the thrust of the pushing dog (13).

3. Installation according to either one of Claims 1 and 2, characterized in that the rearward facing face (25a) of the sonotrode cutter (25) is inclined forwards with respect to the slicing plane (P) so that it does not come into contact with the front face of the food being sliced.

4. Installation according to any one of Claims 1 to 3, characterized in that the conveyor (2, 2a) is made up of several juxtaposed and spaced-apart bands (6a) between which there are inserted, at their downstream return region, the upstream return regions of the bands (52) of a portioning conveyor (50) comprising dogs (56) projecting from each band to catch the first slice (57) of a portion of several slices.

5. Installation according to Claim 1, characterized in that the portioning conveyor 50 occupies a fixed position whereas the main conveyor (2, 2a) and its slicing station (41) are mounted on a chassis (1a) that can be displaced longitudinally by driving means, between a working position, in which its bands are inserted between those (52) of the portioning conveyor (50), and a retreated position, in which the bands (6a) of the two conveyors are spaced apart to allow the dogs 56 to pass, or to allow the end pieces (3a) to be removed.

## Patentansprüche

1. Vorrichtung zum Schneiden von Pasteten mit Teighülle und anderen brotartig vorliegenden Nahrungsmitteln, die folgendes aufweist:
- einen Hauptförderer (2, 2a), dessen Förderband (6) mit einer schrittweisen Bewegung, deren Schritt regulierbar ist, zwischen einer stromaufwärts gelegenen Beladungsstelle (A), wo jedes Brot (3) in Längsrichtung angeordnet wird, und einer stromabwärts gelegenen Schneidestelle (B) zwangsangetrieben wird,
- seitliche, zwangsangetriebene, endlose Mitnahmemittel (4), die an jeder Seite des Förderers angeordnet sind, mit welchen diese synchronisiert sind, und die zusammen Querleisten (13) tragen, die sich in Querrichtung oberhalb des Förderbands (6) erstrecken, wobei diese Querleisten in Längsrichtung mit einem Abstand, der größer als die Länge eines brotartigen Nahrungsmittels ist, voneinander beabstandet sind, und die jeweils dazu vorgesehen sind, aufeinanderfolgend mit dem hinteren Ende (3a) eines brotartigen Nahrungsmittels in Kontakt zu treten,
- Haken (5), die verschwenkbar auf von den Querleisten (13) getragenen Querachsen (15) angebracht und jeweils mit einem Hebel (16) fest verbunden sind, der mit seitlichen Rampen (18) zusammenwirkt, die dazu vorgesehen sind, diese zwischen der Beladungsstelle (A) und der Schneidestelle (B) von einer inaktiven in eine aktive Position, in der jeder Haken (5) von oben in das hintere Ende (3a) des Brots (3) eindringt und diese gegen die entsprechende Querleiste (13) festhält, zu überbringen,
- und eine Schneidestelle (B), die ein Ultraschallmesser (25) aufweist, das an Mittel gebunden ist, die dazu geeignet sind, auf das Messer eine vertikale, beschleunigte und dann verzögerte Bewegung zu übertragen, und zwar in einer Vertikalebene, die durch die Längsachse der stromabwärts gelegenen Rolle (8) des Förderers (2, 2a) verläuft.

2. Vorrichtung nach Anspruch 1, dadurch gekennzeichnet, daß sie an der Beladungsstelle (A) einen verschwenkbaren Anschlag (32) aufweist, der mit seinen Rückstellmitteln (33) unter dem Förderband angeordnet und dazu vorgesehen ist, in der Beladungsphase durch eine der Öffnungen, mit denen das Förderband ausgestattet ist, hindurchzureichen, um das Brot in Längsrichtung zurückzuhalten, und sich nach Instellungbringen der Haken (5) in dem hinteren Ende (3a) elastisch unter dem Schub des Mitnehmers (13) zurückzustellen.

3. Vorrichtung nach einem der Ansprüche 1 und 2, dadurch gekennzeichnet, daß die nach hinten gerichtete Seite (25a) des Ultraschallmessers (25) bezüglich der Schneideebene (P) nach vorne geneigt ist, um nicht mit der Vorderseite des Nahrungsmittels, das geschnitten wird, in Kontakt zu treten.

4. Vorrichtung nach einem der Ansprüche 1 bis 3, dadurch gekennzeichnet, daß der Förderer (2, 2a) aus einer Vielzahl von nebeneinander liegenden und voneinander beabstandeten Bändern (6a) zusammengesetzt ist, zwischen die sich im Bereich ihrer stromabwärts gelegenen Umlenkzone die stromaufwärts gelegenen Umlenkzonen der Bänder (52) eines Portionierförderers (50) einschieben, die Anschläge (56) aufweisen, die von jedem Band hervorstehen, um die erste Scheibe (57) einer Portion von mehreren Scheiben zu stützen.

5. Vorrichtung nach Anspruch 1, dadurch gekennzeichnet, daß der Portionierförderer (50) eine feste Position einnimmt, wohingegen der Hauptförderer (2, 2a) und seine Schneidestelle (41) auf einem Gestell (1a) montiert sind, das in Längsrichtung durch Motormittel zwischen einer Arbeitsposition, in der seine Bänder sich zwischen diejenigen (52) des Portionierförderers (50) einschieben, und einer zurückgeschobenen Position, in der die Bänder (6a) der beiden Förderer voneinander beabstandet sind, um die Anschläge (56) hindurchtreten zu lassen, oder um die Enden (3a) zu beseitigen verschiebbar ist.
